## Europäisches Patentamt
## European Patent Office
## Office européen des brevets

(19)

(11) Veröffentlichungsnummer: **0 003 327**
**B1**

# EUROPÄISCHE PATENTSCHRIFT

(12)

(45) Veröffentlichungstag der Patentschrift:
08.06.83

(21) Anmeldenummer: 79100148.0

(22) Anmeldetag: 18.01.79

(51) Int. Cl.³: **C 02 F 1/52, C 02 F 3/12**

(54) Verfahren zur chemisch-mechanischen Aufbereitung und/oder Reinigung von Grund-, Oberflächen- oder Abwässern.

(30) Priorität: 18.01.78 DE 2802066

(43) Veröffentlichungstag der Anmeldung:
08.08.79 Patentblatt 79/16

(45) Bekanntmachung des Hinweises auf die Patenterteilung:
08.06.83 Patentblatt 83/23

(84) Benannte Vertragsstaaten:
CH FR GB IT NL

(56) Entgegenhaltungen:
AT-A-304387
CH-A-361543
DE-A-2026694
DE-B-1139076
FR-A-2304572
FR-A-2339575
GB-A-1418203
US-A-2137966
US-A-2348122
WATER RESEARCH, Vol. 11, Nr. 9, 1977, Oxford, B. M. VAN VLIET: «The efficacy of inclined tube and plate modules in a high line clarification process», Seiten 783–788

(73) Patentinhaber: Passavant-Werke AG & Co. KG,
D-6209 Aarbergen 7 (DE)
(84) Benannte Vertragsstaaten: CH FR IT NL

(73) Patentinhaber: U. Passavant AG Michelbacher Hütte,
D-6209 Aarbergen 7 (DE)
(84) Benannte Vertragsstaaten: GB

(72) Erfinder: v. Hagel, Günter Dr. Dipl.-Chem,
Schillerstrasse 6, D-6209 Aarbergen 2 (DE)
Erfinder: Berlenbach, Norbert, Langendellschlag 90,
D-6200 Wiesbaden-Dotzheim (DE)

(74) Vertreter: Glawe, Delfs, Moll & Partner Patentanwälte,
Postfach 26 01 62 Liebherrstrasse 20,
D-8000 München 26 (DE)

**Verfahren zur chemisch-mechanischen Aufbereitung und/oder Reinigung von Grund-, Oberflächen- oder Abwässern**

Die Erfindung betrifft ein Verfahren der im Oberbegriff des Anspruchs 1 angegebenen Art, welches üblicherweise als Kontaktschlammverfahren bezeichnet wird. Ein Verfahren dieser Art ist aus der DE-A-2026694 bekannt. Ein derartiges Verfahren läuft in folgenden Phasen ab:

Phase I: Erste Flockungsphase

Zumischung eines oder mehrerer Flockungsmittel (z. B. Eisen und/oder Aluminiumverbindungen bzw. -salze und/oder synthetischer nichtionogener bzw. kationaktiver Produkte und/oder aktivierter Kieselsäure) und/oder eines oder mehrerer Fällungsmittel (z. B. Calciumhydroxid, -oxid oder Calciumsalze) und/oder eines oder mehrerer Beschwerungsmittel (z. B. Kalksteinmehl) und/oder gegebenenfalls eines oder mehrerer Flockungshilfsmittel und/oder gegebenenfalls eines oder mehrerer den pH-Wert ändernder Reaktionsmittel zum Rohwasser und/oder zum bereits vorbehandelten bzw. vorgereinigten Rohwasser unter Rühren.

Phase II: Schlammkontaktphase

Zumischung von Kontaktschlamm sowie gegebenenfalls auch eines oder mehrerer Flockungsmittel und/oder Flockungshilfsmittel und/oder Fällungsmittel und/oder Beschwerungsmittel und/oder den pH-Wert ändernder Reaktionsmittel unter Rühren.

Phase III: Zweite Flockungsphase

Zumischen eines oder mehrerer Flockungshilfsmittel, (z. B. synthetisch kationaktive, nichtionogene oder anionaktive Produkte, beispielsweise auf Polyacrylamidbasis, und/oder Naturprodukte bzw. veränderte Naturprodukte, beispielsweise auf Stärke- oder Alginatbasis und/oder anorganische Produkte wie aktivierte Kieselsäure, Bentonite usw.) unter Anwendung einer eingetragenen Rührenergie von mehr als 20 Watt pro $m^3$ des in dieser Zone verfügbaren Reaktionsvolumens und unter Beschränkung der Aufenthaltszeit auf höchstens 5 min.

Phase IV: Grobflockenrückbildungsphase

Ausreaktion der vorher zugegebenen Mittel, gegebenenfalls unter Zusatz weiterer geeigneter Stoffe der oben genannten Stoffgruppen; Ausbildung sedimentierfähiger Partikel und/oder sedimentierfähiger Zusammenballungen von Partikeln (= Flocken und/oder Reaktionsprodukte und/oder disperse Rohwasserinhaltsstoffe), zusammen mit absorbierten und/oder angelagerten und/oder eingeschlossenen Rohwasserinhaltsstoffen bei fehlender oder höchstens mässiger Bewegung.

Phase V: Abtrennphase

Abtrennung der Flocken und/oder der Reaktionsprodukte und/oder der Rohwasserinhaltsstoffe vom aufbereiteten, geklärten oder anderweitig gereinigten Wasser (= Reinwasser); getrennter Abzug der in Form von Flocken und/oder Reaktionsprodukten oder in sonstiger Form angefallenen Feststoffe (= Schlamm) und des Reinwassers.

Bei dem vorstehend genannten bekannten Verfahren dieser Art findet zwar die Phase III (Zugabe des Flockungsmittels, zweite Flockungsphase) in einem eigenen, von den übrigen Verfahrensphasen abgetrennten Reaktionsraum statt; die übrigen Verfahrensphasen sind aber nicht streng voneinander getrennt, sondern sind teilweise miteinander kombiniert und können sich gegenseitig beeinflussen. Eine Einstellung optimaler Verfahrensbedingungen in jeder einzelnen Phase ist bei dem bekannten Verfahren daher nicht möglich. Ein besonderer Nachteil des bekannten Verfahrens besteht darin, dass wegen der geringen Feststoffkonzentration des sedimentierten und rückgeführten Schlamms sehr grosse Mengen an Rücklaufschlamm nötig sind, um eine einigermassen ausreichende Konzentration vom Kontaktschlamm in der Phase II zu erzielen. Dies bedeutet, dass eine mehrfache Rezirkulation des zu reinigenden Wassers notwendig ist, wobei das Volumen der umzuwälzenden Wassermenge meist das Drei- bis Zehnfache des Anlagendurchsatzes beträgt. Dies hat zur Folge, dass trotz hoher Zugaben an Reaktionsmitteln der Restgehalt an im Reinwasser verbleibenden, meist feindispersen Feststoffen relativ gross bleibt und ferner erhebliche Anteile zugesetzter Flockungshilfsmittel ungenutzt mit dem Reinwasser abgeführt werden. Von besonderem Nachteil ist das aufgrund der erforderlichen langen Gesamtreaktions- und Absetzzeit notwendige grosse Bauvolumen der Anlagen.

Die daraus resultierenden Totzeiten erschweren in hohem Masse bereits die manuelle Einregulierung der Dosiermenge der zum Zwecke der Reinigung zugesetzten Mittel und machen, insbesondere bei stärker schwankender Rohwasserbeschaffenheit, eine automatisierte Prozessführung illusorisch. Den Schlammkontaktanlagen häufig zwecks weiterer Reinigung des Wassers nachgeordnete Filter müssen mit sehr feinkörnigem Filtermaterial in grosser Schichtdicke befüllt werden, da eine Rückhaltung, insbesondere der feinstdispersen Partikel ansonsten nicht oder nur in zu geringem Umfang erfolgt. Neben den dadurch bedingten hohen zusätzlichen Investitionskosten ist auch aufgrund der daraus zwangsläufig resultierenden kurzen Filterstandzeiten ein hoher Wartungsaufwand erforderlich. Dennoch sind die so erzielbaren Ergebnisse, gemessen insbesondere an den in den letzten Jahren gestellten und gegenüber früher deutlich gesteigerten Anforderungen an die Trinkwasser- und Betriebswasserqualität, in aller Regel unbefriedigend und häufig ungenügend.

Der Erfindung liegt die Aufgabe zugrunde, ein Verfahren der genannten Art zu schaffen, das bei drastischer Verringerung der Durchlaufzeit des zu reinigenden Wassers durch die Anlage, und dementsprechender Verringerung der Reaktionszeit und der Baugrösse der Anlage, eine erhebliche Verbesserung der Reinigungsleistung erbringt.

Diese Aufgabe wird mit dem im Anspruch 1 angegebenen Verfahren gelöst. Durch die Anwendung der Schrägplatten- oder Röhrensedimentation mit anschliessender zusätzlicher Aufkonzentrierung des Rücklaufschlamms wird in Verbindung mit der konsequenten Trennung der einzelnen Verfahrensphasen voneinander der überraschende Vorteil erzielt, dass durch geringe Mengen eines hoch eingedickten Rücklaufschlamms eine hohe Kontaktschlammkonzentration in der Schlammkontaktphase (Zone II) aufrechterhalten werden kann, die in Verbindung mit einer optimal abgestimmten Rührenergie zu einer drastischen Verbesserung der Reinigungsleistung bei gleichzeitig erheblich verringerter Verweilzeit in der Anlage führt. Aufgrund der geringeren Verweilzeit kann die Anlage rascher und empfindlicher auf Änderungen der Verfahrensparameter ansprechen, wodurch bei einem derartigen Verfahren erstmals die Möglichkeit einer gezielten Regelung der Verfahrensparameter in Abhängigkeit von Änderungen der Menge und Beschaffenheit des zu behandelnden Rohwassers möglich wird.

Die mit der Erfindung erzielte Verbesserung des Verfahrensablaufs muss nicht nur wegen des Ausmasses der Steigerung der Reinigungsleistung und Verringerung der Reaktionszeit als überraschend angesehen werden, sondern auch deshalb, weil nicht zu erwarten war, das hoch eingedickter Schlamm, der ja aus bereits zusammengelagerten Schlammflocken besteht und als mehr oder weniger inaktiv gelten müsste, überhaupt als Rücklaufkontaktschlamm zur Ausübung einer flokkungsinduzierenden Wirkung geeignet ist.

Zu den in den einzelnen Verfahrensphasen durch das erfindungsgemässe Verfahren erzielten Wirkungen kann folgendes näher erläutert werden:

Die konsequente Trennung der verschiedenen Verfahrensphasen führt zusammen mit einer optimalen Abstimmung der aufgewendeten Rührleistung in den Phasen I, II und III zur Ausbildung von sehr grossen, gut sedimentierbaren Zusammenballungen von ausgeflockten Verunreinigungen in der Grobflockenrückbildungsphase (Phase IV).

Derartige extrem gut ausgebildete Flocken, die Voraussetzung für einen optimalen Abtrenneffekt sind, erweisen sich allerdings als sehr empfindlich gegenüber auch sehr kleinen Scherkräften. Um eine Wiederzerteilung bzw. eine Abspaltung kleiner und damit weit schlechter sedimentierender Flockenbruchstücke, die zu einer deutlichen Verschlechterung der Reinwasserbeschaffenheit führen würde, zu vermeiden, ist es erforderlich, längere Fliesswege sowie jegliche andere ungünstige Beeinflussung der Flocken zu vermeiden. Während solche Bedingungen in Schwebstoffkontaktanlagen bekannter Bauweise allein schon aus Gründen der langen Verweilzeiten, der unumgänglichen gegenseitigen Beeinflussung der Flokken infolge der Kreislaufführung, der unzureichenden Trennung von Phase IV und Phase V sowie der langen Sedimentationswege grundsätzlich nicht erfüllbar sind, ist dies bei erfindungsgemäss der Phase IV unmittelbar nachgeordneten Parallelplatten- und/oder Röhrensedimentatoren ohne Probleme möglich. Bei letzteren werden die optimal ausgebildeten, aber gegenüber Scherkräften empfindlichen sehr grossen Agglomerate aus dem Reaktionsraum der Phase IV in einer völlig gleichmässigen laminaren Strömung innerhalb von weniger als 1 min und nur über wenige Meter hinweg zum Ort der Sedimentationsvorgänge sehr schonend transportiert und dort unverzüglich aufgrund der nur wenige cm betragenden Sedimentationswege vom Reinwasser abgetrennt (für Vergleichswerte siehe Tabelle 1).

Es wurde gefunden, dass bei konsequenter Anwendung der erfindungsgemässen Verfahrensführung sowohl die im Reinwasser verbleibenden Feststoffanteile, praktisch unabhängig von der Art des Rohwassers auf Massen unter 0,2 bis 0,5 $g/m^3$, im Vergleich zu bisher nicht unterschreitbaren Werten zwischen etwa 5 bis 10 $g/m^3$ reduziert werden können. Gleichzeitig lässt sich die hydraulische Belastung der Sedimentatoren ohne Nachteile mehr als verdoppeln.

Das erfindungsgemässe Verfahren gestattet ausserdem, ohne dass die beschriebene Ausbildung optimal sedimentierfähiger Flockenagglomerate in Phase IV ungünstig beeinflusst wird, bei Anwendung dem Charakter des Rohwassers entsprechend angepasster sehr grosser Rührenergien in den Verfahrensphasen I, II und III und gleichzeitiger vielfacher Verkleinerung der Reaktionsvolumina, die in diesem Ausmass bisher ungekannte, praktisch quantitative Ausflockung kolloiddisperser Rohwasserverunreinigungen sowie eine gegenüber bekannten Flockungsverfahren deutlich gesteigerte Entfernung adsorbierbar gelöster Verunreinigungen. Dabei kann die Reaktionszeit einschliesslich der Abtrennzeit im Separator auf im Minimum etwa 10 min, höchstens jedoch auf 15 min herabgesetzt werden. Demgegenüber können bei Schwebstoffkontaktanlagen üblicher Bauweise Gesamtaufenthaltszeiten von etwa 30 min nicht unterschritten werden, bei grösseren derartigen Anlagen beträgt diese in aller Regel 1 h und mehr. Von besonderem Vorteil für den Ablauf der Filtrationsvorgänge in einer eventuell nachgeordneten Filteranlage ist ferner, dass aufgrund der durch das erfindungsgemässe Verfahren möglichen deutlichen Ersparnis an Flokkungshilfsmitteln und der daraus sowie aus den Flockungsbedingungen in der Phase III resultierenden, nur sehr kleinen im Reinwasser verbleibenden Restgehalte an Flockungshilfsmitteln durch letztere in der Praxis der Filtration häufig beobachtete ungünstige Effekte, beispielsweise drastische Verkürzungen der Filterlaufzeiten, vermieden werden. In vielen Fällen erübrigt sich auch aufgrund der sehr hohen Reinigungsleistung des erfindungsgemässen Verfahrens eine zusätzliche Filtration des aufbereiteten Wassers.

In einer Kontaktschlammanlage beträgt die im Kreislauf geführte Kontaktschlammenge ein Mehrfaches des Anlagendurchsatzes pro Stunde. Hierdurch werden bei den in derartigen Anlagen lediglich erreichbaren, ausserordentlich geringen Feststoffkonzentrationen unnötigerweise grosse Wassermengen in die Schlammkontaktphase (Phase II) eingeführt, die diese und die Phasen III und IV vollständig durchlaufen müssen und auch die Phase V erheblich belasten.

Überraschenderweise gelingt es mit Hilfe der in Anspruch 1 gekennzeichneten Erfindung, diese Nachteile ebenfalls zu beseitigen.

Durch das erfindungsgemässe Verfahren wird der Anteil des Ballastwassers im Rücklaufschlamm auf 1 bis weniger als 3 Vol.-% des Anlagendurchsatzes reduziert, so dass alle der Zone II nachfolgenden Zonen II bis VI wesentlich kleiner dimensioniert und/oder stärker belastet werden können. Dies gelingt gemäss der vorliegenden Erfindung dadurch, dass die Abtrennung der Feststoffpartikel und Zusammenballungen unter Verwendung von Schrägplatten- oder Röhrensedimentatoren vorgenommen und dass zumindest der als Kontaktschlamm in die Zone II zurückzuführende Schlamm vorher auf einen Feststoffgehalt von mindestens 6% aufkonzentriert wird. Dies ist mit Hilfe von Schrägplatten- oder Röhrensedimentatoren ohne weiteres möglich, insbesondere wenn erfindungsgemäss die Aufkonzentrierung des Schlamms in einer der Sedimentationsvorrichtung ohne Zwischenförderung nachgeschalteten Eindickzone (Zone VI) erfolgt, die vorteilhaft mit einer Krählvorrichtung für den Schlamm ausgestattet ist. Hierbei werden Flockenschlämme aus der Wasseraufbereitung auf Feststoffanteile von 6 bis 20% konzentriert, im Gegensatz zu Schlammkontaktanlagen üblicher Bauart, bei denen nur Schlammfeststoffkonzentrationen innerhalb der Flockungsanlagen von in aller Regel weniger als 0,5% erhalten werden. Das erfindungsgemässe Verfahren gestattet es, das Volumen des rückgeführten Kontaktschlamms auf weniger als 3 Vol.-% des Anlagengesamtdurchsatzes zu beschränken. Damit wird ausser der so ermöglichten weiteren Verkleinerung der Reaktionsräume auch die zusätzliche hydraulische Belastung des nachgeordneten Parallelplatten- oder Röhrenseparators auf ein Minimum verringert. Hieraus resultiert eine wesentlich gesteigerte Belastbarkeit bei wesentlich verbesserter Reinwasserqualität und eine Verkleinerung der Sedimentationsbecken in Wasseraufbereitungsanlagen um ein Vielfaches.

Ein für die Praxis ausserordentlich bedeutsamer Vorteil des erfindungsgemässen Verfahrens besteht darin, dass aufgrund der sehr kleinen Gesamtaufenthaltszeit im Flockungs- und Abtrennsystem vernachlässigbar kleine Totzeiten resultieren. Als eine wichtige Ausgestaltung des erfindungsgemässen Verfahrens wird daher vorgeschlagen, zur Anpassung der Verfahrensführung insbesondere an wechselnde Beschaffenheiten des zu reinigenden Wassers oder Abwassers, in Abhängigkeit von einem oder von mehreren Messergebnissen die Menge des Rücklaufschlamms und/oder die in den verschiedenen Reaktionsräumen zugesetzten Mengen an Reaktionsmitteln und/oder die Rührenergien in den Zonen I bis III, einzeln oder gemeinsam, zu verändern, wobei die Rührenergien in den den Phasen I, II und III zugeordneten Reaktionsräumen auf deutlich über 20 Watt/m³ des dort jeweils verfügbaren Reaktionsvolumens gesteigert werden können. Als Steuergrösse kann die Menge der im Rohwasser und/oder Reinwasser enthaltenen Feststoffe und/oder gelösten Stoffe sowie die Konzentration des Kontaktschlamms und/oder die Kontaktschlammkonzentration in den Reaktionsräumen dienen. Daneben können weitere geeignete Parameter als Steuergrösse herangezogen werden, beispielsweise die Höhe des Schlammspiegels in der Eindickzone.

Tabelle 1: Gegenüberstellung von Auslegungsgrunddaten und Betriebsergebnissen

| 1 | 2 | 3 | 4 |
|---|---|---|---|
| | Schwebstoffkontakt-Anlage | Verfahren entsprechend der Erfindung | Verbesserung um den Faktor X |
| Länge des Sedimentationsweges | 2000–8000 cm | 5–7 cm | |
| Oberflächenbelastung (m³/m².h) bezogen auf die Oberfläche des Sedimentationsbeckens | 2–5 | 30–52 | 10–15 |
| Kontaktschlammrückführung (in % des Wasserdurchsatzes) | 100–500 | 1–<3 | |
| Konzentration des rückgeführten Schlammes (g/l) | <5 | bis zu 100 | bis zu 20 |
| Energieeintrag in der Schlammkontaktkammer (Watt/m³ Beckenvolumen) | 1–10 | 20–150 | |
| Gesamtzeit für Flockung und Sedimentation (Min.) | 60–150 | 10–15 | 6–10 |

| 1 | 2 | 3 | 4 |
|---|---|---|---|
| | Schwebstoffkontakt-Anlage | Verfahren entsprechend der Erfindung | Verbesserung um den Faktor X |
| Restkonzentration des Primärflockungs-mittel-Kations im Klarwasser (mg/l) | 1–3 | 0,1–0,3 | 10 |
| Restkonzentration von Polyelektrolyt im Klarwasser | 10–20 % der Dosier-menge | ≤ 10% | 2–3 |
| Trübung des Klarwasser | 0,5–2 FTU | < 0,3 FTU | |
| Laufzeit der Filter | | | 2–10 |
| Zeitbedarf bis zum stabilen Betrieb der An-lage nach Änderung von Betriebsparame-tern* (Minuten) | 100–300 | 15–20 | 7–15 |
| Konzentration des aus dem System abgezogenen Schlammes | < 1 % | 6–25% | 6–25 |

* Hydraulische Stossbelastungen, Änderungen der Chemikaliendosierung, Änderung des Energieeintrages

## Patentansprüche

1. Verfahren zur chemisch-mechanischen Aufbereitung von Grund-, Oberflächen- oder Abwässern aller Art unter Verwendung von Flockungs-, Fällungs-, Flockungshilfs-, Beschwerungs- und/oder den pH-Wert ändernden Reaktionsmitteln mit folgenden, in getrennten Zonen nacheinander durchzuführenden Verfahrensschritten:

a) Zumischung mindestens eines der vorgenannten Mittel zum Rohwasser unter Rühren (Zone I);

b) Zumischung von aus dem Verfahren gewonnenem, rückgeführtem Kontaktschlamm sowie gegebenenfalls auch eines oder mehrerer der vorgenannten Mitteln unter Rühren (Zone II);

c) Zumischung eines oder mehrerer Flockungshilfsmittel unter Anwendung einer eingetragenen Rührenergie von mehr als 20 W/m$^3$ des in dieser Zone verfügbaren Reaktionsvolumens und unter Beschränkung der Aufenthaltszeit auf höchstens fünf Minuten (Zone III);

d) Ausreaktion der vorher zugegebenen Mittel bei fehlender oder höchstens mässiger Bewegung unter Ausbildung sedimentierbarer Partikel (Zone IV);

e) Abtrennung der Flocken und/oder Reaktionsprodukte und/oder der Rohwasserinhaltsstoffe vom geklärten Wasser durch Sedimentation (Zone V), wobei der gebildete Schlamm getrennt vom Reinwasser abgezogen und teilweise als Kontaktschlamm zum Verfahrensschritt b zurückgeführt wird,

dadurch gekennzeichnet, dass die Abtrennung der Flocken und/oder Reaktionsprodukte und/oder Rohwasserinhaltsstoffe vom Wasser (Zone V) unter Verwendung von Schrägplatten- und/oder Röhrensedimentatoren erfolgt und dass mindestens der als Kontaktschlamm zurückzuführende Teil des abgetrennten Schlamms zusätzlich auf eine Feststoffkonzentration von mindestens 6–20 Gew.-%, bei Schlämmen mit hohem Anteil an Fällungsprodukten und/oder Rohwasserinhaltsstoffen bis zu 50 Gew.-%, aufkonzentriert wird und die Menge dieses Kontaktschlamms weniger als 3 Vol.-% des Anlagengesamtdurchsatzes beträgt.

2. Verfahren nach Anspruch 1, dadurch gekennzeichnet, dass die Aufkonzentrierung des zurückzuführenden Teils des Schlammes in einer der Sedimentationszone (Zone V) ohne mechanische Zwischenförderung nachgeschalteten Eindickzone (Zone VI) vorgenommen wird.

3. Verfahren nach Anspruch 2, dadurch gekennzeichnet, dass in der Eindickzone (Zone VI) zusätzlich zur Schwerkraft mechanische Kräfte, insbesondere über Krähleinrichtungen eingebrachte Kräfte, auf die in der Wasserphase absinkenden Flocken und auf den abgesetzten Schlamm einwirken.

4. Verfahren nach einem der Ansprüche 1 bis 3, dadurch gekennzeichnet, dass man laufend die Konzentration des rückzuführenden Kontaktschlammes und/oder die Konzentration der Verunreinigungen im Rohwasser und/oder die Konzentration der Restverunreinigungen im Reinwasser misst und in Abhängigkeit vom Messergebnis die pro Zeiteinheit rückgeführte Kontaktschlammenge und/oder die in die Zonen I, II oder III eingetragene Rührenergie und/oder die Menge der zugesetzten Flockungs- und Reaktionsmittel steuert.

5. Verfahren nach Anspruch 3, dadurch gekennzeichnet, dass man in Abhängigkeit vom Messergebnis die Rührenergie in den Zonen I und II zeitweise auf über 20 Watt pro m$^3$ des in der Zone jeweils verfügbaren Reaktionsvolumens steigert.

6. Verfahren nach einem oder mehreren der vorstehenden Ansprüche, dadurch gekennzeichnet, dass man die Höhe des Schlammspiegels in der Eindickzone (Zone VI) kontinuierlich oder diskontinuierlich misst und in Abhängigkeit vom Messergebnis das Volumen des pro Zeiteinheit zurückgeführten Kontaktschlammes verändert.

## Claims

1. Process for the chemical/mechanical treatment of ground water, surface water or waste water of all types using flocculating agents, precipitating agents, flocculation auxiliary agents, loading agents and/or reaction agents adjusting the pH value, with the following process teps to be carried out successively in separate zones:

a) adding at least one of the above-mentioned agents to the untreated water, under agitation (zone I);

b) adding recirculated contact sludge obtained from the process, as well as optionally one or more of the abovementioned agents, under agitation (zone II);

c) adding one or more flocculation auxiliary agents while applying an applied agitation power of more than 20 W/m³ of the reaction volume available in this zone and while limiting the residence time to a maximum of five minutes (zone III);

d) reacting out the previously added agents by the absence of movement or at most moderate movement, with the formation of sedimentable particles (zone IV);

e) separating the flocs and/or reaction products and/or the substances contained in the untreated water from the clarified water by sedimentation (zone V), in which case the sludge formed separated from the clean water is drawn off and is partly recirculated as contact sludge to the process step b, characterised in that the separation of the flocs and/or the reaction products and/or substances contained in the untreated water from water (zone V) is effected using inclinedplate and/or tubular sedimentation devices, and in that at least that portion of separated sludge to be recirculated as contact sludge is additionally concentrated to a solid concentration of at least 6−20% by weight and in the case of sudges with a high proportion of precipitation products and/or substances contained in the untreated water up to 50% by weight, and the quantity of this contact sludge amounts to less than 3% by volume of the total apparatus throughput.

2. Process according to claim 1, characterised in that the concentration of the portion of sludge to be recirculated is carried out in a thickening zone (zone VI) arranged downstream of the sedimentation zone (zone V) without intermediate mechanical transfer.

3. Process according to claim 2, characterised in that in the thickening zone (zone VI) mechanical forces, in addition to the force of gravity, in particular forces applied via raking devices, act on the flocs settling in the water phase and on the deposited sludge.

4. Process according to any of claims 1 to 3, characterised in that the concentration of the contact sludge to be recirculated and/or the concentration of the impurities in the untreated water and/or the concentration of the residual impurities in the clean water is measured continuously and, depending on the measurement result, the amount of recirculated contact sludge per unit time and/or the agitation power applied in zones I, II or III and/or the amount of added flocculating agents and reacting agents is controlled.

5. Process according to claim 3, characterised in that depending on the measurement result the agitation power in zones I and II is increased periodically to more than 20 Watts per m³ of the reaction volume respectively available in the zone.

6. Process according to one or more of the preceding claims characterised in that the height of the sludge level in the thickening zone (zone VI) is measured continuously or discontinuously and, depending on the measurement result, the volume of the contact sludge recirculated per unit time is varied.

## Revendications

1. Procédé pour le traitement chimico-mécanique d'eaux souterraines, d'eaux de surface ou d'eaux usées de tous genres, avec utilisation d'agents de floconnement, de précipitation, d'adjuvants de floconnement, de matières de charge et/ou de réactifs modifiant le pH et comprenant les phases suivantes à effectuer successivement dans des zones séparées:

a) Addition et mélange d'eau moins l'un des agents précités à l'eau brute sous agitation (zone I);

b) Addition et mélange, sous agitation, de boue de contact provenant du traitement et recyclée, ainsi que, le cas échéant, d'un ou de plusieurs des agents précités (zone II);

c) Addition et mélange d'un ou de plusieurs adjuvants de floconnement en appliquant une énergie d'agitation de plus de 20 W/m³ du volume réactionnel disponible dans cette zone et en limitant la durée de séjour à 5 minutes au maximum (zone III);

d) Achèvement de la réaction des agents ajoutés précédemment en l'absence de mouvement ou, tout au plus, avec un mouvement modéré, avec formation de particules sédimentables (zone IV);

e) Séparation des flocons et/ou produits de réaction et/ou des substances contenues dans l'eau brute d'avec l'eau épurée par sédimentation (zone V), la boue formée étant extraite séparément de l'eau pure et recyclée en partie, en tant que boue de contact, dans la phase b) du traitement,

caractérisé en ce que la séparation des flocons et/ou produits de réaction et/ou substances contenues dans l'eau brute d'avec l'eau (zone V) est effectuée en utilisant des dispositifs de sédimentation à plateaux inclinés ou tubulaires, et en ce qu'au moins la partie de la boue séparée qui doit être recyclée comme boue de contact subit une concentration supplémentaire jusqu'à une teneur en matières solides d'au moins 6 à 20% en poids, pouvant atteindre 50% en poids dans le cas de boues contenant une forte proportion de produits de précipitation et/ou de matières contenues dans l'eau brute, la quantité de cette boue de contact s'élevant à moins de 3% en volume du débit total de l'installation.

2. Procédé selon la revendication 1, caractérisé en ce que la concentration de la partie à recycler de la boue est effectuée dans une zone d'épaississement (zone VI) placée à la suite de la zone de sédimentation (zone V) sans transport intermédiaire mécanique.

3. Procédé selon la revendication 2, caractérisé en ce que dans la zone d'épaississement (zone VI), il agit, sur les flocons qui tombent dans la phase aqueuse et sur la boue déposée, des forces mécaniques, en particulier des forces produites par des dispositifs de raclage, en plus de la force de gravité.

4. Procédé selon l'une quelconque des revendications 1 à 3, caractérisé en ce qu'on mesure en permanence la concentration de la boue de contact à recycler et/ou la concentration des impuretés dans l'eau brute et/ou la concentration des impuretés résiduelles dans l'eau pure et on règle, en fonction du résultat des mesures, la quantité de boue de contact recyclée par unité de temps et/ou l'apport d'énergie d'agitation dans les zones I, II ou III et/ou la quantité des agents de floconnement et des réactifs ajoutés.

5. Procédé selon la revendication 3, caractérisé en ce qu'en fonction du résultant des mesures, on augmente par moments l'énergie d'agitation dans les zones I et II à plus de 20 watts par m³ du volume réactionnel disponible dans chaque zone.

6. Procédé selon l'une quelconque des revendications 1 à 5, caractérisé en ce qu'on mesure constamment ou par intermittence la hauteur du niveau de boue dans la zone d'épaississement (zone VI) et, en fonction du résultat des mesures, on fait varier le volume de la boue de contact recyclée par unité de temps.